# EUROPÄISCHE PATENTANMELDUNG

(11) **EP 3 389 168 A1**
(43) Veröffentlichungstag der Anmeldung: **17.10.2018**
(21) Anmeldenummer: 17166040.0
(22) Anmeldetag: 11.04.2017
(51) Int. Cl.: H02K 9/22, H02K 3/50

(54) **STATOR EINER ELEKTRISCHEN MASCHINE**

(71) Anmelder: Siemens Aktiengesellschaft, 80333 München (DE)
(72) Erfinder: Bott, Erich, 97618 Hollstadt (DE); Dölz, Volker, 97616 Bad Neustadt (DE); Schöppach, Melanie, 97638 Mellrichstadt - Bahra (DE)

(57) **Zusammenfassung**

Die Erfindung betrifft einen Stator (1) einer elektrischen Maschine. Der Stator (1) umfasst ein Statorgehäuse (3), ein in dem Statorgehäuse (3) angeordnetes Blechpaket (5), eine an dem Blechpaket (5) angeordnete Statorwicklung (7), die einen ein axiales Ende der Statorwicklung (7) bildenden Wickelkopf (9) aufweist, und wenigstens einen Wärmeleitkörper (11), der den Wickelkopf (9) mit dem Statorgehäuse (3) verbindet.

## Beschreibung

Die Erfindung betrifft einen Stator einer elektrischen Maschine.

Elektrische Maschinen erzeugen Verluste, die die Maschinen erwärmen, wodurch der Wirkungsgrad der Maschinen reduziert wird. Je besser es gelingt die Wärme aus einer elektrischen Maschine abzuführen, desto höher wird der Wirkungsgrad der Maschine. Häufig wird die Statorwicklung eines Stators einer elektrischen Maschine mit einer Tränkung oder/und einem Verguss zur Wärmeabfuhr versehen. Die Herstellung derartiger Tränkungen und Vergüsse ist jedoch aufwändig und teuer.

Der Erfindung liegt die Aufgabe zugrunde, einen hinsichtlich der Wärmeabfuhr verbesserten Stator einer elektrischen Maschine anzugeben.

Die Aufgabe wird erfindungsgemäß durch die Merkmale des Anspruchs 1 gelöst.

Vorteilhafte Ausgestaltungen der Erfindung sind Gegenstand der abhängigen Ansprüche.

Ein erfindungsgemäßer Stator einer elektrischen Maschine umfasst ein Statorgehäuse, ein in dem Statorgehäuse angeordnetes Blechpaket, eine an dem Blechpaket angeordnete Statorwicklung, die einen an einem axialen Ende der Statorwicklung angeordneten Wickelkopf aufweist, und wenigstens einen Wärmeleitkörper, der den Wickelkopf mit dem Statorgehäuse verbindet.

Die Verbindung des Wickelkopfs mit dem Statorgehäuse durch einen Wärmeleitkörper ermöglicht, Wärme von dem Wickelkopf zu dem Statorgehäuse abzuführen. Dadurch kann eine Tränkung oder ein Verguss der Statorwicklung zur Entwärmung der Statorwicklung entfallen. Da eine Verbindung des Wickelkopfs und des Statorgehäuses durch einen oder mehrere Wärmeleitkörper wesentlich einfacher und kostengünstiger als eine Tränkung oder ein Verguss der Statorwicklung ist, können vorteilhaft der Herstellungsaufwand, die Herstellungskosten und die Produktionszeit zur Herstellung der Statorwicklung gegenüber einer mit einer Tränkung oder einem Verguss versehenen Statorwicklung deutlich reduziert werden.

Eine Ausgestaltung der Erfindung sieht vor, dass jeder Wärmeleitkörper elastisch ausgebildet ist. Dadurch kann sich der Wärmeleitkörper vorteilhaft den Formkonturen der Statorwicklung anpassen, die herstellungsbedingt variieren können.

Eine weitere Ausgestaltung der Erfindung sieht vor, dass jeder Wärmeleitkörper überwiegend aus einem Material auf Basis eines elastisch eingestellten Kunststoffs, insbesondere eines Silikons oder Polyurethans, gefertigt ist. Dadurch wird vorteilhaft ermöglicht, dass der Wärmeleitkörper der Wärmebelastung im Betrieb der elektrischen Maschine Stand hält und eine ausreichende Spannungsfestigkeit aufweist.

Vorzugsweise sind in dem Material auf Basis eines elastisch eingestellten Kunststoffs die Wärmeleitung verbessernde Füllstoffelemente, vorzugsweise elektrisch nichtleitende Füllstoffelemente, insbesondere mineralische oder keramische Füllstoffelemente, eingebettet. Dadurch wird vorteilhaft die Wärmeleitfähigkeit des Wärmeleitkörpers erhöht.

Eine weitere Ausgestaltung der Erfindung sieht vor, dass wenigstens ein Wärmeleitkörper an einem axialen Ende des Blechpakets anliegt. Dadurch kann vorteilhaft durch den Wärmeleitkörper auch Wärme direkt von dem Blechpaket an das Statorgehäuse abgeführt werden.

Eine weitere Ausgestaltung der Erfindung sieht vor, dass wenigstens ein Wärmeleitkörper als ein Formteil ausgebildet ist. Dadurch wird vorteilhaft die Montage des Wärmeleitkörpers durch die Verwendung eines vorgefertigten Formteils erleichtert.

Eine weitere Ausgestaltung der Erfindung sieht vor, dass wenigstens ein Wärmeleitkörper als ein Wärmeleitpad ausgebildet ist. Dies vereinfacht und verbilligt die Herstellung des Wärmeleitkörpers gegenüber der Herstellung eines als ein Formteil ausgebildeten Wärmeleitkörpers. Beispielsweise kann das Wärmeleitpad aus handelsüblichem Plattenmaterial ausgestanzt werden.

Eine weitere Ausgestaltung der Erfindung sieht vor, dass wenigstens ein Wärmeleitkörper aus mehreren Wärmeleitkörperkomponenten besteht. Beispielsweise sind die Wärmeleitkörperkomponenten eines Wärmeleitkörpers axial hintereinander angeordnet. Dies ermöglicht vorteilhaft eine Flexibilisierung der Verbindung des Wickelkopfs und des Statorgehäuses durch einen Wärmeleitkörper, da die Dicke des Wärmeleitkörpers durch die Anzahl axial hintereinander angeordneter Wärmeleitkörperkomponenten dem axialen Abstand des Wickelkopfs von dem Statorgehäuse angepasst werden kann.

Eine weitere Ausgestaltung der Erfindung sieht vor, dass jeder Wärmeleitkörper formschlüssig oder/und kraftschlüssig oder/und stoffschlüssig mit dem Statorgehäuse oder/und mit dem Wickelkopf verbunden ist. Dies ermöglicht vorteilhaft, dass jeder Wärmeleitkörper bei der Herstellung und im Betrieb des Stators an der vorgesehenen Position verbleibt.

Eine weitere Ausgestaltung der Erfindung sieht vor, dass die Statorwicklung mit Polspultechnik gefertigt ist. Eine Statorwicklung, die nicht mit Polspultechnik gefertigt ist, muss in der Regel separat an dem Blechpaket fixiert werden. Dazu wird häufig ein Verguss der Statorwicklung verwendet, durch den die Statorwicklung auch entwärmt wird. Mit Polspultechnik gefertigte Statorwicklungen sind jedoch so kompakt und fest gewickelt, dass eine mechanische Fixierung der Statorwicklungen an dem Blechpaket entfallen kann. Insbesondere wird zur mechanischen Fixierung derartiger Statorwicklungen kein Verguss benötigt. Dennoch werden auch mit Polspultechnik gefertigte Statorwicklungen häufig vergossen, um sie zu entwärmen. Die erfindungsgemäße Entwärmung durch Wärmeleitkörper ermöglicht daher vorteilhaft, bei in Polspultechnik gefertigten Statorwicklungen ganz auf einen Verguss zu verzichten.

Eine weitere Ausgestaltung der Erfindung sieht vor, dass die Statorwicklung zwei jeweils ein axiales Ende der Statorwicklung bildende Wickelköpfe aufweist, die jeweils durch wenigstens einen Wärmeleitkörper mit dem Statorgehäuse verbunden sind. Dies ermöglicht vorteilhaft, beide Enden der Statorwicklung durch Wärmeleitkörper zu entwärmen, und verbessert dadurch die Wärmeabfuhr aus der Statorwicklung gegenüber einer Entwärmung an nur einem Ende der Statorwicklung.

Eine erfindungsgemäße elektrische Maschine weist einen erfindungsgemäßen Stator auf. Insbesondere kann die elektrische Maschine ein Servomotor sein. Die Vorteile einer derartigen elektrischen Maschine ergeben sich aus den oben genannten Vorteilen eines erfindungsgemäßen Stators.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit einer Zeichnung näher erläutert werden.

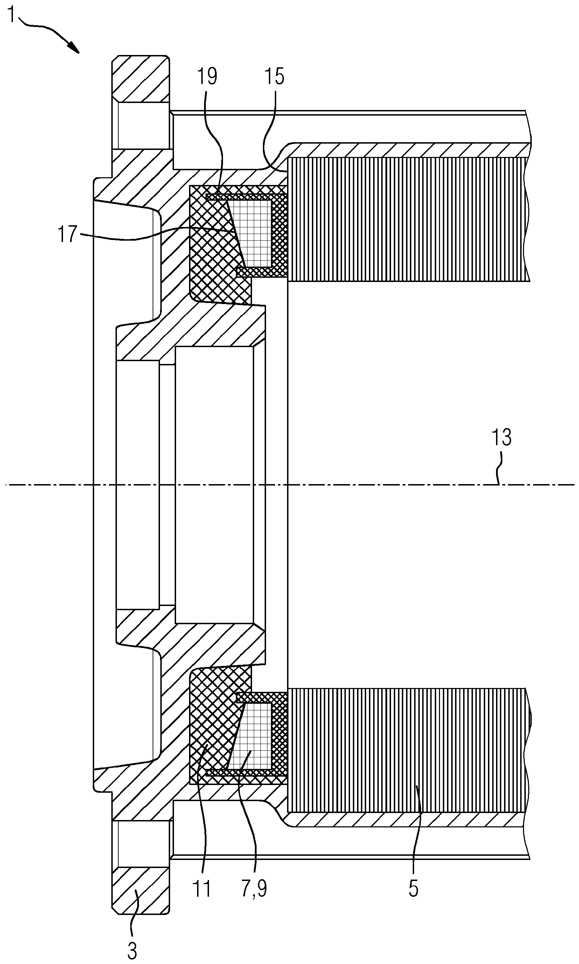

Die einzige Figur zeigt einen Ausschnitt einer Schnittdarstellung eines Stators 1 einer elektrischen Maschine. Die elektrische Maschine ist beispielsweise ein Servomotor.

Der Stator 1 umfasst ein Statorgehäuse 3, ein in dem Statorgehäuse 3 angeordnetes Blechpaket 5, eine an dem Blechpaket 5 angeordnete Statorwicklung 7, die einen ein axiales Ende der Statorwicklung 7 bildenden Wickelkopf 9 aufweist, und einen Wärmeleitkörper 11, der den Wickelkopf 9 mit dem Statorgehäuse 3 verbindet.

Das Blechpaket 5 ist rohrartig um eine Statorachse 13 herum ausgebildet. Die Statorachse 13 definiert eine axiale Richtung und ist eine Drehachse eines in der Figur nicht dargestellten Rotors der elektrischen Maschine.

Der Wickelkopf 9 weist Spulenköpfe auf, die entlang des Blechpakets 5 verlaufende elektrische Leiter der Statorwicklung 7 miteinander verschalten. Der Wickelkopf 9 ist an einem axialen Blechpaketende 15 des Blechpakets 5 angeordnet und verläuft ringförmig um die Statorachse 13 herum.

Die Statorwicklung 7 ist beispielsweise mit Polspultechnik gefertigt. Das bedeutet, dass das Blechpaket 5 Konturen aufweist, die als zahnartige Polkerne ausgebildet sind. Auf die Polkerne werden vorgefertigte Spulen aufgesetzt. Die vorgefertigten Spulen bestehen jeweils aus einem Spulenträger, der aus einem elektrisch isolierenden Material besteht, und darauf in der Regel maschinell aufgewickelten, isolierten elektrischen Leitern. Gegebenenfalls können die Spulenträger später wieder entfernt werden, wenn die Statorwicklung 7 genügend Eigenstabilität aufweist.

Die Statorwicklung 7 ist weder mit einer Tränkung noch mit einem Verguss versehen. Die Wärmeabfuhr von Wärme aus der Statorwicklung 7 wird statt durch eine Tränkung oder einen Verguss der Statorwicklung 7 durch den Wärmeleitkörper 11 bewirkt, durch den Wärme von dem Wickelkopf 9 zu dem Statorgehäuse 3 abgeführt wird. Dadurch werden vorteilhaft der Herstellungsaufwand, die Herstellungskosten und die Produktionszeit zur Herstellung der Statorwicklung 7 gegenüber einer mit einer Tränkung oder einem Verguss versehenen Statorwicklung 7 reduziert.

Der Wärmeleitkörper 11 ist in dem in der Figur gezeigten Ausführungsbeispiel als ein ringförmiges Formteil ausgebildet. Der Wärmeleitkörper 11 ist zwischen dem Wickelkopf 9 und einem dem Wickelkopf 9 benachbarten Innenwandbereich des Statorgehäuses 3 angeordnet. Der Wärmeleitkörper 11 liegt großflächig an diesem Innenwandbereich sowie an einem axialen Wickelkopfende 17 des Wickelkopfes 9 und an einer Außenseite 19 des Wickelkopfes 9, die von dem axialen Ende des Wickelkopfes 9 zu dem axialen Blechpaketende 15 verläuft, an. Der Wärmeleitkörper 11 erstreckt sich entlang der Außenseite 19 des Wickelkopfes 9 bis zu dem axialen Blechpaketende 15, an dem er ebenfalls anliegt. Der Wärmeleitkörper 11 füllt den Raumbereich zwischen dem Wickelkopf 9 und dem diesem benachbarten Innenwandbereich des Statorgehäuses 3 vollständig aus.

Der Wärmeleitkörper 11 ist formschlüssig oder/und kraftschlüssig oder/und stoffschlüssig mit dem Statorgehäuse 3 oder/und mit dem Wickelkopf 9 verbunden.

Der Wärmeleitkörper 11 ist elastisch ausgebildet, um sich den Formkonturen der Statorwicklung 7, die herstellungsbedingt variieren können, anzupassen. Ferner weist der Wärmeleitkörper 11 eine hohe Wärmeleitfähigkeit auf, um Wärme von dem Wickelkopf 9 zu dem Statorgehäuse 3 zu leiten.

Beispielsweise ist der Wärmeleitkörper 11 überwiegend aus einem Material auf Basis eines elastisch eingestellten Kunststoffs, insbesondere eines Silikons oder Polyurethans, gefertigt, um der Wärmebelastung Stand zu halten und eine ausreichende Spannungsfestigkeit aufzuweisen. In dem Material sind beispielsweise die Wärmeleitung verbessernde, vorzugsweise elektrisch nichtleitende Füllstoffelemente, insbesondere mineralische oder keramische Füllstoffelemente, eingebettet, um die Wärmeleitfähigkeit des Wärmeleitkörpers 11 zu erhöhen.

Bei einem weiteren Ausführungsbeispiel ist der Wärmeleitkörper 11 nicht als ein Formteil, sondern als ein Wärmeleitpad ausgebildet. Beispielsweise kann das Wärmeleitpad aus handelsüblichem Plattenmaterial ausgestanzt sein. Das Wärmeleitpad verläuft analog zu dem in der Figur gezeigten Ausführungsbeispiel ringförmig um die Statorachse 13 herum zwischen dem Wickelkopf 9 und dem Statorgehäuse 3 und liegt großflächig sowohl an dem Wickelkopf 9 als auch an dem Statorgehäuse 3 an.

Bei einem weiteren Ausführungsbeispiel weist der Stator 1 statt nur eines Wärmeleitkörpers 11 mehrere Wärmeleitkörper 11 auf, die um die Statorachse 13 herum verteilt sind. Jeder Wärmeleitkörper 11 ist zwischen dem Wickelkopf 9 und dem Statorgehäuse 3 angeordnet sind und liegt an dem Wickelkopf 9 und dem Statorgehäuse 3 an. Die Wärmeleitkörper 11 können analog zu den vorgenannten Ausführungsbeispielen jeweils als ein Formteil oder als ein Wärmeleitpad ausgebildet sein. Beispielsweise kann jeder Wärmeleitkörper 11 einem Spulenkopf des Wickelkopfes 9 zugeordnet sein und diesen Spulenkopf mit dem Statorgehäuse 3 verbinden. Die Verwendung mehrerer Wärmeleitkörper 11 statt nur eines ringförmig um die Statorachse 13 verlaufenden Wärmeleitkörpers 11 flexibilisiert vorteilhaft die Verbindung des Wickelkopfs 9 und des Statorgehäuses 3 durch Wärmeleitkörper 11, da die einzelnen Wärmeleitkörper 11 nicht der ringförmigen Struktur des Wickelkopfs 9 angepasst werden müssen.

Bei allen vorgenannten Ausführungsbeispielen kann ein Wärmeleitkörper 11 ferner aus mehreren Wärmeleitkörperkomponenten bestehen, die beispielsweise axial hintereinander angeordnet sind. Auch dies flexibilisiert vorteilhaft die Verbindung des Wickelkopfs 9 und des Statorgehäuses 3 durch Wärmeleitkörper 11, da die Dicke eines Wärmeleitkörpers 11 durch die Anzahl axial hintereinander angeordneter Wärmeleitkörperkomponenten dem axialen Abstand des Wickelkopfs 9 von dem Statorgehäuse 3 angepasst werden kann.

Bei allen vorgenannten Ausführungsbeispielen ist der Wärmeleitkörper 11 bzw. sind die Wärmeleitkörper 11 beispielsweise an einem axialen Wickelkopfende 17 angeordnet, das in dem Bereich eines axialen Endes des Statorgehäuses 3 liegt, an dem das Statorgehäuse 3 aufgrund der Befestigung an einer Maschine oder Anlage am besten entwärmt wird.

Ferner können alle vorgenannten Ausführungsbeispiele dahingehend erweitert werden, dass die Statorwicklung 7 zwei jeweils ein axiales Ende der Statorwicklung 7 bildende Wickelköpfe 9 aufweist, die jeweils durch wenigstens einen Wärmeleitkörper 11 mit dem Statorgehäuse 3 verbunden sind.

Obwohl die Erfindung im Detail durch bevorzugte Ausführungsbeispiele näher illustriert und beschrieben wurde, so ist die Erfindung nicht durch die offenbarte Beispiele eingeschränkt und andere Variationen können vom Fachmann hieraus abgeleitet werden, ohne den Schutzumfang der Erfindung zu verlassen.

## Patentansprüche

1. Stator (1) einer elektrischen Maschine, der Stator (1) umfassend
- ein Statorgehäuse (3),
- ein in dem Statorgehäuse (3) angeordnetes Blechpaket (5),
- eine an dem Blechpaket (5) angeordnete Statorwicklung (7), die einen ein axiales Ende der Statorwicklung (7) bildenden Wickelkopf (9) aufweist, und
- wenigstens einen Wärmeleitkörper (11), der den Wickelkopf (9) mit dem Statorgehäuse (3) verbindet.

2. Stator (1) nach Anspruch 1,
**dadurch gekennzeichnet, dass** jeder Wärmeleitkörper (11) elastisch ausgebildet ist.

3. Stator (1) nach Anspruch 1 oder 2,
**dadurch gekennzeichnet, dass** jeder Wärmeleitkörper (11) überwiegend aus einem Material auf Basis eines elastisch eingestellten Kunststoffs gefertigt ist.

4. Stator (1) nach Anspruch 3,
**dadurch gekennzeichnet, dass** der elastisch eingestellte Kunststoff ein Silikon oder ein Polyurethan ist.

5. Stator (1) nach Anspruch 3 oder 4,
**dadurch gekennzeichnet, dass** in dem Material auf Basis eines elastisch eingestellten Kunststoffs wärmeleitungsverbessernde Füllstoffelemente eingebettet sind.

6. Stator (1) nach Anspruch 5,
**dadurch gekennzeichnet, dass** die Füllstoffelemente elektrisch nichtleitend sind.

7. Stator (1) nach Anspruch 5 oder 6,
**dadurch gekennzeichnet, dass** die Füllstoffelemente mineralische oder keramische Füllstoffelemente sind.

8. Stator (1) nach einem der vorgehenden Ansprüche,
**dadurch gekennzeichnet, dass** wenigstens ein Wärmeleitkörper (11) an einem axialen Blechpaketende (15) des Blechpakets (5) anliegt.

9. Stator (1) nach einem der vorgehenden Ansprüche,
**dadurch gekennzeichnet, dass** wenigstens ein Wärmeleitkörper (11) als ein Formteil ausgebildet ist.

10. Stator (1) nach einem der vorgehenden Ansprüche,
**dadurch gekennzeichnet, dass** wenigstens ein Wärmeleitkörper (11) als ein Wärmeleitpad ausgebildet ist.

11. Stator (1) nach einem der vorgehenden Ansprüche,
**dadurch gekennzeichnet, dass** wenigstens ein Wärmeleitkörper (11) aus mehreren Wärmeleitkörperkomponenten besteht.

12. Stator (1) nach einem der vorgehenden Ansprüche,
**dadurch gekennzeichnet, dass** jeder Wärmeleitkörper (11) formschlüssig oder/und kraftschlüssig oder/und stoffschlüssig mit dem Statorgehäuse (3) oder/und mit dem Wickelkopf (9) verbunden ist.

13. Stator (1) nach einem der vorgehenden Ansprüche,
**dadurch gekennzeichnet, dass** die Statorwicklung (7) mit Polspultechnik gefertigt ist.

14. Stator (1) nach einem der vorgehenden Ansprüche,
**dadurch gekennzeichnet, dass** die Statorwicklung (7) zwei jeweils ein axiales Ende der Statorwicklung (7) bildende Wickelköpfe (9) aufweist, die jeweils durch wenigstens einen Wärmeleitkörper (11) mit dem Statorgehäuse (3) verbunden sind.

15. Elektrische Maschine mit einem gemäß einem der vorhergehenden Ansprüche ausgebildeten Stator (1).
